# EUROPEAN PATENT APPLICATION

(11) **EP 4 174 832 A1**
(43) Date of publication of application: **03.05.2023**
(21) Application number: 21204826.8
(22) Date of filing: 26.10.2021
(51) Int. Cl.: G09G 3/20

(54) **PROCESSING UNIT, IN-VEHICLE INFOTAINMENT SYSTEM, METHOD AND COMPUTER PROGRAM**

(71) Applicant: Bayerische Motoren Werke Aktiengesellschaft, 80809 München (DE)
(72) Inventor: Zaki, Tarek, 81829 München (DE)

(57) **Abstract**

Embodiments relate to a processing unit (30). The processing unit (30) for improving a user's viewing angle (ω) on a display (210a; 210g; 210i) integrated in a tiltable structure (200a; 200g; 200i) may comprise one or more interfaces (32) configured to communicate with the display (210a; 210g; 210i) and processing circuitry (34) configured to control the one or more interfaces (32). Further, the processing circuitry (34) may be configured to determine a tilting angle of the tiltable structure (200a; 200g; 200i) and to adjust a display parameter based on the determined tilting angle to improve the user's viewing angle (ω) on the display (210a; 210g; 210i).

## Description

The present disclosure relates to the field of displays integrated into tiltable structures. Embodiments relate to a processing unit for improving a user's viewing angle on a display, an in-vehicle infotainment system, a method and a computer program.

For example, an in-vehicle rear-seat entertainment (RSE) system enables a rear-seat passenger to enjoy his ride by watching and interacting with multimedia content, such as movies, apps, etc. The RSE system can be realized by mounting a display to the backside of the front seat. Such mounted displays are commonly used, either provided by the vehicle-manufacturer or by attaching an own-tablet on a mechanical holder. This consumes a lot of unnecessary space due to the protruding display construction.

An alternative is an integration of a RSE system display inside the seat structure, e.g., behind a cover glass. However, the integration into the tiltable seat structure may decrease a user experience, since a viewing angle on the display may be changed by tilting the seat structure. This issue may appear with any entertainment/infotainment system integrated into a tiltable structure, e.g., in an airplane. Thus, there may be a need to provide an improved concept for improving a user's viewing angle on a display integrated into a tiltable structure.

It is therefore a finding that a user's viewing angle on a display integrated into a tiltable structure can be improved by adjusting a display parameter based on a determined tilting angle of the tiltable structure. Thus, the viewing angle on the display can be adjusted, e.g., by adjusting an active area of the display, a position of the display, etc.

Examples provide a processing unit for improving a user's viewing angle on a display integrated in a tiltable structure. The processing unit comprises one or more interfaces configured to communicate with the display and processing circuitry configured to control the one or more interfaces. Further, the processing circuitry is configured to determine a tilting angle of the tiltable structure and adjust a display parameter based on the determined tilting angle to improve the user's viewing angle on the display. Thus, a radiation characteristic of the display can be adjusted to improve a user's viewing angle, e.g., by adjusting an active area of the display, a position of display (e.g., an orientation), etc. In an example, the display parameter may comprise information about an orientation of the display such that adjusting the display parameter leads to an adjustment of the orientation of the display. This way, the display orientation can be adjusted to an orientation of the tiltable structure.

In an example, the display parameter may comprise information about a position of the display in the tiltable structure such that adjusting the display parameter leads to an adjustment of the position and/or a dimension of the display in the tiltable structure. This way, the display (e.g., a bendable display) can be positioned at a position at the tiltable structure, where the user's viewing angle may be increased, e.g., by a shape of the tiltable structure.

In an example, the display parameter may comprise information about an active display area of the display such that adjusting the display parameter leads to an adjustment of the active display area. This way, an active area can be adjusted to a tilt of the tiltable structure, which may improve the user's viewing angle.

Examples provide, an in-vehicle infotainment system. The in-vehicle infotainment system comprises a processing unit according as described above, a display integrated in a tiltable structure and a position sensor to determine a tilting angle of the tiltable structure. Thus, a tilting angle of the tiltable structure can be determined in an eased way and can be used by the processing unit to adjust a display parameter.

In an example, the in-vehicle infotainment system may further comprise a sensor configured to determine information about a user's position and/or a user's viewing angle. Further, the processing unit may be further configured to determine information about a desired user's display orientation based on the determined information of the sensor and to adjust the display parameter based on the determined information about the desired user's display orientation. This way, the display parameter can be adjusted to different users, e.g., a child and a man, which have different positions, e.g., different seat heights, leading to different viewing angles.

In an example, the in-vehicle infotainment system may further comprise at least one lens for compensating a tilt of the tiltable structure and wherein the at least one lens can be moved in front of the display if a determined tilting angle exceeds a threshold. This way, the user's viewing angle can be adjusted without adjusting a position/active area of the display.

In an example, the tiltable structure may comprise a housing region for the display, wherein a dimension of the housing region is shaped to allow an adjustment of the display parameter to compensate for a tilting angle of the tiltable structure. This way, the dimension of the tiltable structure, e.g., a housing region behind an outer edge of a seat, can be shaped in a way that the display parameter can be adjusted in an eased way, e.g., a bendable display may adapt a shape of the housing region (e.g., the shape of the outer edge).

Examples relate to a method for improving a user's viewing angle on a display integrated in a tiltable structure. The method comprises determining a tilting angle of the tiltable structure and adjusting a display parameter based on the determined tilting angle to improve the user's viewing angle on the display.

Examples further relate to a computer program having a program code for performing the method described above, when the computer program is executed on a computer, a processor, or a programmable hardware component.

Some examples of apparatuses, methods and/or computer programs will be described in the following by way of example only, and with reference to the accompanying figures, in which
Fig. 1 shows a block diagram of an example of a processing unit;
Fig. 2 shows different examples of a display integrated in a tiltable structure; and
Fig. 3 shows an example of a method.

Various example embodiments will now be described more fully with reference to the accompanying drawings in which some example embodiments are illustrated. In the figures, the thicknesses of lines, layers or regions may be exaggerated for clarity. Optional components may be illustrated using broken, dashed, or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "includes", or "including", when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

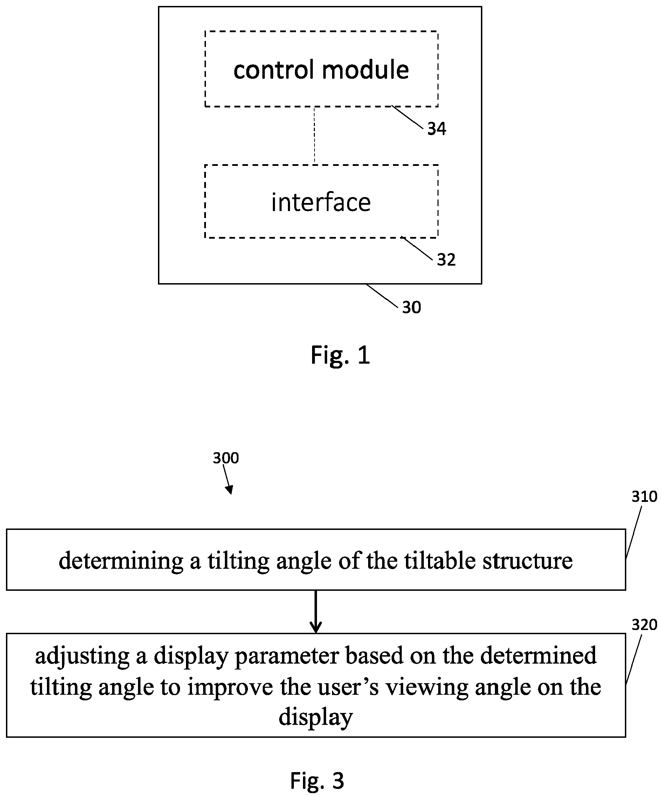

Fig. 1 shows a block diagram of an example of a processing unit 30. The processing unit 30 for improving a user's viewing angle on a display integrated in a tiltable structure comprises one or more interface 32 configured to communicate with the display and processing circuitry 34 configured to control the one or more interfaces. Further, the processing circuitry is configured to determine a tilting angle of the tiltable structure and to adjust a display parameter based on the determined tilting angle to improve the user's viewing angle on the display. Thus, a user's experience can be increased, since the user's viewing angle can be improved.

A tiltable structure can be every structure, e.g., inside a vehicle, airplane, etc., which can be tilted and used to house a display, a backrest, a headrest, a seat, a dashboard (e.g., housing a central information display (CID), a sun shield, etc.

The display can be mounted movable with respect to the tiltable structure. For example, an orientation of the display can be changed and thus a relative position of the display to the tiltable structure can be changed. The display can be rotated in at least one dimension (ID). For example, the display can be rotated in two dimensions (2D), such that the display may have 2D degree of freedom. For example, a first tilt angle of the display may be up and down (e.g., to adjust an orientation of the display according to a tilting angle of a housing structure, e.g. a seat, a dashboard, etc., in which the display is arranged) and a second tilt angle of the display may be left and right (e.g., to adjust an orientation of the display to a position of a user in front of the display, e.g., the user can show to the person next to him something on the display). Consequently, by the 2D degree of freedom also diagonally rotation of the display as a combination of the first tilt angle and the second tilt angle are possible. Thus, the display orientation can be adjusted to improve a user experience, e.g., can be adjusted to a position/viewing angle of the user. A maximum first/second tilt angle may depend on a shape of the tiltable structure, a display size, a distance between the display and a predicted user's place, a distance between the display and other fixed structures, e.g., a backrest of a seat, dashboard structure, etc. The display can be moved in a housing region of the tiltable structure. For example, the housing region of the tiltable structure may comprise a curved shape. Further, the display may be a bendable display and thus by moving the display in the housing region a shape of the display may be adjusted to match to a curved shape of the housing region. This way, a radiation characteristic of the display can be adjusted by adjusting a shape of the display. For example, the tiltable structure may comprise different sub-region in the housing region suitable for arranging the display to achieve a desired radiation characteristic of the display by the curved shaped of the housing region.

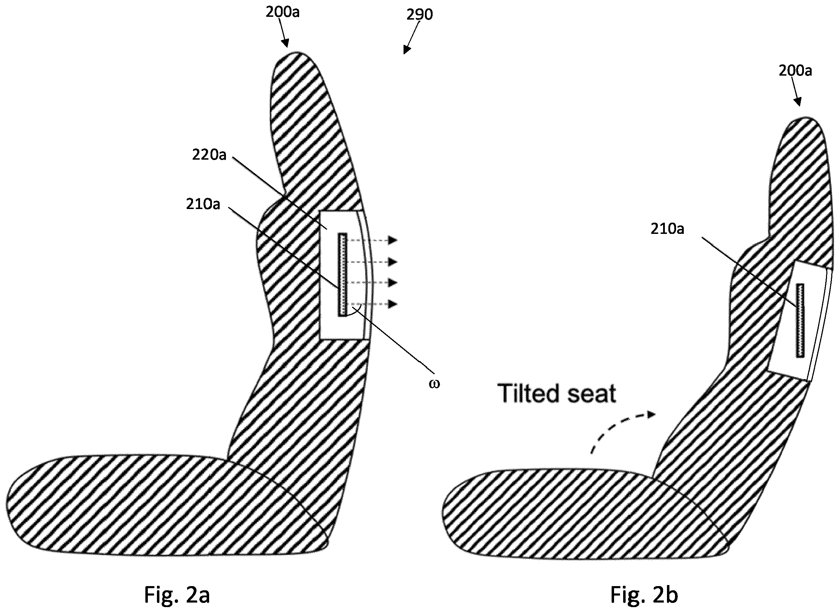

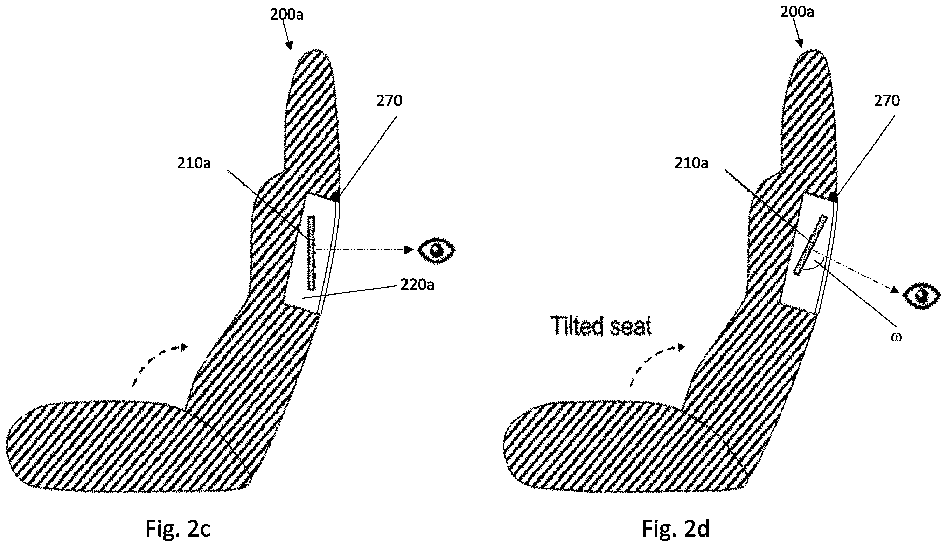

The viewing angle on the display can be given by a surface normal on a front side of the display (see, e.g., Fig. 2a and Fig. 2d). The tilting angle can be an angle by which the tiltable structure is tilted compared to an initial position.

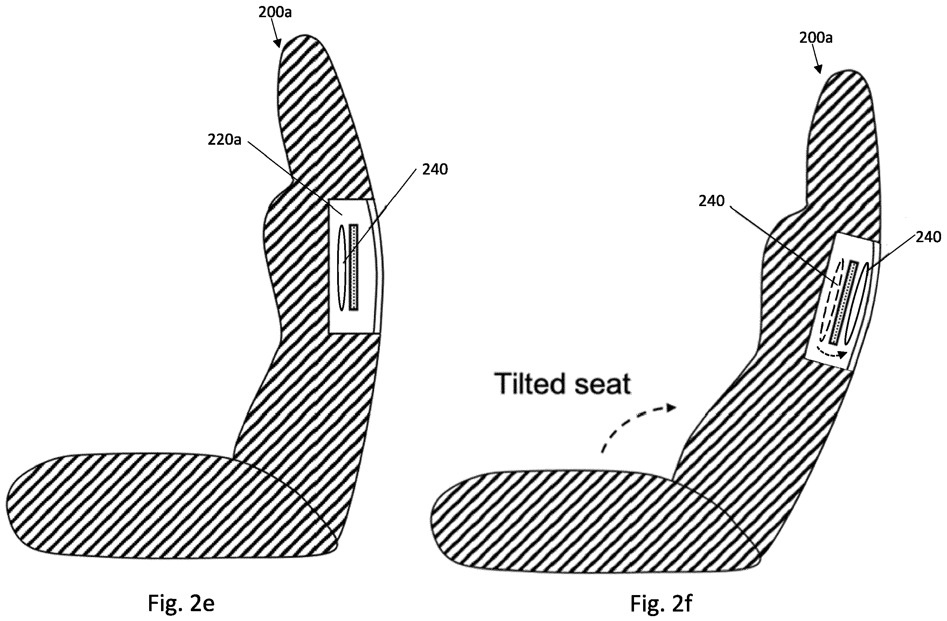

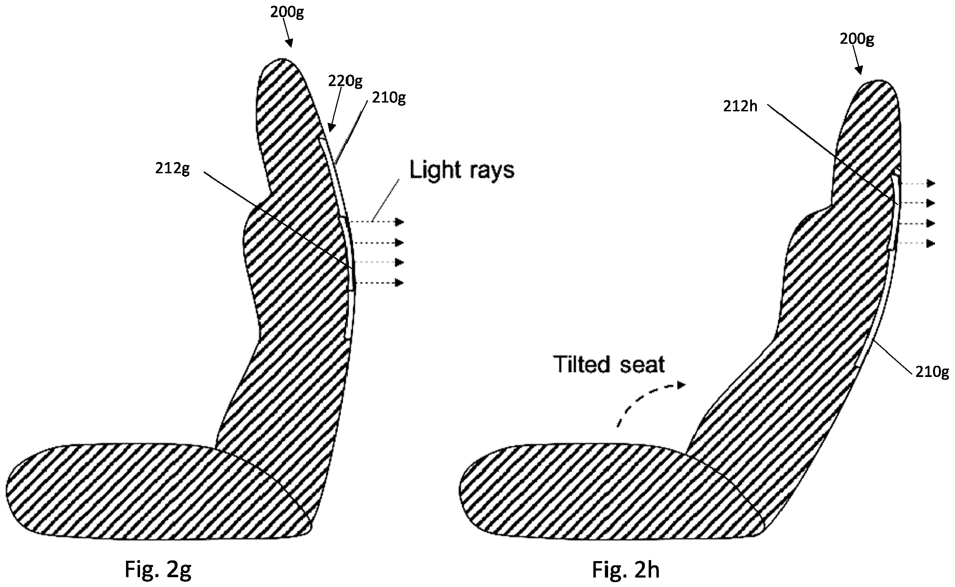

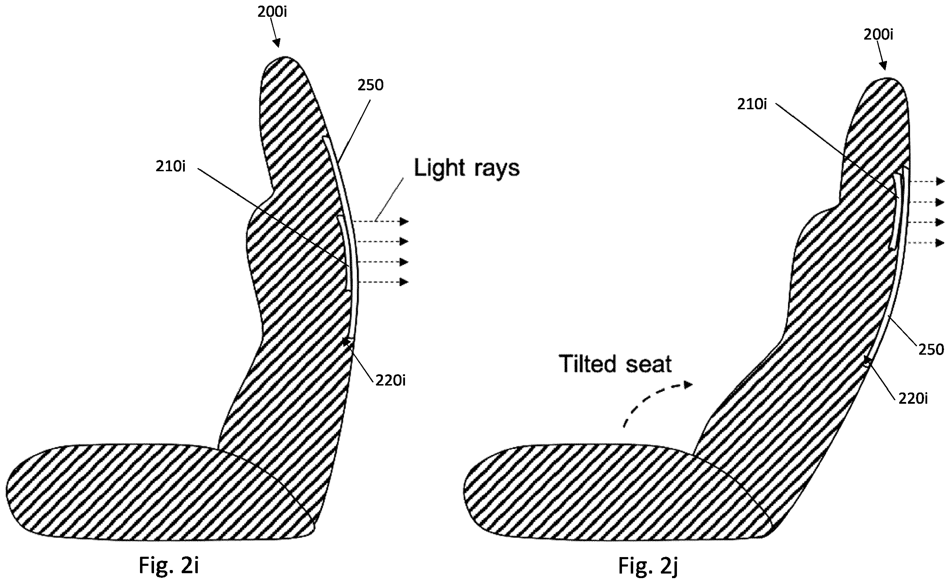

The display parameter can be any parameter which can be used to adjust an orientation and/or a radiation characteristic of the display. For example, the display parameter may comprise information about a tilting angle of the display (see Figs. 2a - 2d), an optical element used for adjusting a radiation characteristic of the display (see Fig. 2e and Fig. 2f), an active area of the display (see Fig. 2g and Fig. 2h), a position of the display (see Fig. 2i and Fig. 2j).

In an example, the display parameter may comprise information about an orientation of the display such that adjusting the display parameter leads to an adjustment of the orientation of the display. For example, the display parameter may comprise the first tilt angle and/or the second tilt angle.

In an example, the display parameter may comprise information about a position of the display in the tiltable structure such that adjusting the display parameter leads to an adjustment of the position and/or a dimension of the display in the tiltable structure. For example, the display may be moved inside the housing region of the tiltable structure, e.g., the display may be bendable and may adapt a dimension, e.g., a shape of a front-side, to a sub-region within the housing region. This way, both the position and the dimension (e.g., the shape of the front-side) can be adjusted to improve a user's viewing angle. Especially, the sub-region of the housing region may be shaped to improve the user's viewing angle, thus by moving the display, the shape of the display may be automatically adapted to improve the user's viewing angle.

In an example, the display parameter comprises information about an active display area of the display such that adjusting the display parameter leads to an adjustment of the active display area. For example, only a part of the display may be active (e.g., may display infotainment content), the active display area. The display may be curved, e.g., to match a shape of the tiltable structure and thus activating different region of the display may lead to different radiation characteristic of the display.

As shown in Fig. 1 the respective one or more interfaces 32 are coupled to the respective processing circuitry 34 at the control unit 30. In embodiments the processing circuitry 34 may be implemented using one or more processing units, one or more processing devices, any means for processing, such as a processor, a computer or a programmable hardware component being operable with accordingly adapted software. Similar, the described functions of the processing circuitry 34 may as well be implemented in software, which is then executed on one or more programmable hardware components. Such hardware components may comprise a general-purpose processor, a Digital Signal Processor (DSP), a micro-controller, etc. The processing circuitry 34 is capable of controlling the interface 32, so that any data transfer that occurs over the interface and/or any interaction in which the interface may be involved may be controlled by the processing circuitry 34.

In an embodiment the control unit 30 may comprise a memory and at least one processor 34 operably coupled to the memory and configured to perform the below mentioned method.

In examples the one or more interfaces 32 may correspond to any means for obtaining, receiving, transmitting or providing analog or digital signals or information, e.g. any connector, contact, pin, register, input port, output port, conductor, lane, etc. which allows providing or obtaining a signal or information. An interface may be wireless or wireline and it may be configured to communicate, e.g., transmit or receive signals, information with further internal or external components. The one or more interfaces 32 may comprise further components to enable communication between vehicles. Such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc.

More details and aspects are mentioned in connection with the embodiments described below. The example shown in Fig. 1 may comprise one or more optional additional features corresponding to one or more aspects mentioned in connection with the proposed concept or one or more examples described below (e.g., Fig. 2 - 3).

Fig. 2 shows different examples of a display 210a, 210g, 210i integrated in a tiltable structure 200a, 200g, 200i. The tiltable structure 200a, 200g, 200i may be a tiltable seat, e.g., of a vehicle. For example, the vehicle may be a land vehicle, such a road vehicle, a car, an automobile, an off-road vehicle, a motor vehicle, a bus, a robo-taxi, a van, a truck or a lorry. Alternatively, the vehicle may be any other type of vehicle, such as a train, a subway train, a boat, an airplane or a ship. For example, the proposed concept may be applied to public transportation (trains, bus) and future means of mobility (e.g., robo-taxis) or private mass transportation (airplanes).

The tiltable structure 200a, 200g, 200i comprising the display 210a, 210g, 210i can comprised be an in-vehicle infotainment system 290. The in-vehicle infotainment system 290 comprises a processing unit as described with reference to Fig. 1, a display 210a, 210g, 210i integrated in the tiltable structure 200a, 200g, 200i and a position sensor to determine a tilting angle of the tiltable structure 200a, 200g, 200i. By determining the tilting angle of the tiltable structure 200a, 200g, 200i the display 210a, 210g, 210i, e.g., an orientation of the display can be adjusted to improve the user's viewing angle.

Figs. 2a - 2d show examples for adjusting the display parameter to improve a user's viewing angle ω. For example, the user's viewing angle ω may be defined by a surface normal on the front side of the display 210a. Fig. 2a shows an example of a tiltable structure 200a which is in an initial position and a display 210a which is also in an initial position. The display 210a is arranged in a housing region 220a. The housing region 220a houses the display 210a and enables a tilting of the display 210a by adjusting the display parameter, e.g., a tilting angle of the display 210a, to improve the user's viewing angle ω. As can be seen in Fig. 2b the tiltable structure 200a may be tilted (e.g., by a user of the seat) and thus the processing unit may receive information from the position sensor about a tilting angle of the tiltable structure 200a. Utilizing the tilting angle of the tiltable structure 200a the processing unit may determine the display parameter, e.g., a needed tilting angle of the display 210a to compensate for the tilting angle of the tiltable structure 200a. This way, by use of the display parameter the user's viewing angle ω can be improved by compensating a tilt of the tiltable structure 200a by determining a tilting angle for the display 210a and tilting the display 210a by the determined tilting angle.

In an example, the in-vehicle infotainment system 290 may further comprise a sensor 270 configured to determine information about a user's position and/or a user's viewing angle ω. Further, the processing unit may be further configured to determine information about a desired user's display orientation based on the determined information of the sensor and to adjust the display parameter based on the determined information about the desired user's display orientation. For example as can be seen in Fig. 2c and Fig. 2d a seat height of different users may vary, and thus a user's positions, especially the head position may vary. For example, a seat height of a man may be larger as a seat height of a child (compare Fig. 2c and Fig. 2d). Thus, the viewing angle ω may be improved by determining a display parameter for compensating a different seat height of a user, e.g., by determining information about the user's position, especially the head position. For example, the display parameter may be given by a user's seat height, which can be determined by the sensor 270 and/or by the viewing angle ω. By determining the user's seat height and/or viewing angle ω the processing circuitry can determine, e.g., a tilting angle of the display 210a, to improve the user's viewing angle ω, e.g., by tilting the display such that the surface normal (on the front side of the display 210a) points towards the head/eyes of the user. The sensor 270 can also be utilized to determine a used lens, an active area or a position of the display in the housing region, for example.

The sensor 270 may be any suitable sensor to detect the user's position and/or the user's viewing angle ω, e.g., a camera, an infrared-sensor, an eye-tracking sensor, etc.

The sensor 270 may provide information about a seat height of the user. This information may be combined with the tilting angle of the tiltable structure 200a to determine the needed display parameter to compensate both the seat height of the user and the tilting angle of the tiltable structure 200a. For example, if the tiltable structure 200a is in an initial position (see Fig. 2a) the tilting angle may be 0° but may be still needed to determine the display parameter, e.g., to inform the processing unit that no compensation for the tilting angle of the tiltable structure 200a has to be made.

Fig. 2e and Fig. 2f show another example for adjusting the display parameter in dependence of the tilting angle of the tiltable structure 200a. In an example, the in-vehicle infotainment system 290 may further comprise at least one lens 240 for compensating a tilt of the tiltable structure 200a and wherein the at least one lens 240 can be moved in front of the display 210a if a determined tilting angle exceeds a threshold. This way, the user's viewing angle ω can be adjusted without adjusting a position/active area of the display.

To compensate the tilting angle of the tiltable structure 200a a lens 240 may be utilized, e.g., a tilt-shift lens that straightens the image to the user. This way, a viewing angle of the user can be improved without a need to rotate the display 210a, e.g. using the parallax or Scheimpflug principle. The lens 240 may be arranged in the housing region 220a. When the tiltable structure 200a is tilted from an initial position (Fig. 2e) to a tilted position (Fig. 2f) the lens 240 may be moved in front of the display 210a to compensate for the tilted position. For example, a plurality of lenses may be arranged inside the housing region 220. Each lens 240 of the plurality of lenses may be designed to compensate for a different tilting angle of the tiltable structure 200a. Thus, for different tilting angles of the tiltable structures 200a different lenses 240 may be moved between the display 200a and the user. This way, the display 210a can be mounted in a fixed way without a need for rotating/moving the display to compensate for the tilting angle of the tiltable structure 200a.

For example, the lens 240 may be moved in front of the display when a threshold of a tilting angle of the tiltable structure 200a is exceeded. For example, to each lens 240 of a plurality of lenses is a different threshold (tilting angle) assigned. This way, the lens 240 can be replaced or complemented by another lens for a changing tilting angle of the tiltable structure 200a.

Alternatively, the lens 240 may be combined with the rotation/tilting of the display 210a as described with reference to Figs. 2a - 2d. This way, a dimension of the housing region 220 can be reduced, since both the lens 240 and the tilting of the display 210a can be used for compensating for the tilting angle of the tiltable structure 200a.

Alternatively, the lens 240 may be an adjustable lens, e.g., a mechanical shifted Alvarez lens, a deformable liquid lens, an electronically switched liquid crystal lens, etc. In this way, a plurality of lenses can be omitted since the adjustable lens can be adjusted to an input parameter, e.g., a tilting angle of the tiltable structure 200a, e.g., by adjusting a parameter/property of the adjustable lens, by adjusting a power applied to the adjustable lens, for example. For example, the adjustable lens may be arranged stationary in front of the front-side of the display 210a.

Fig. 2g and Fig. 2h show another example for adjusting the display parameter in dependence of the tilting angle of the tiltable structure 200g. In an example, the tiltable structure 200g may comprise a housing region 220g for the display 210g, wherein a dimension of the housing region 220g is shaped to allow an adjustment of the display parameter to compensate for a tilting angle of the tiltable structure 200g. For example, the housing region 220g may be a recess in the tiltable structure 200g. The recess may be filled in a positive manner by the display 210g. For example, a size of the recess may be (nearly) identical to a size of the display 210g. This way, the housing region 220g and the display 200g may be shaped to compensate for the tilting angle of the tiltable structure 200g.

Alternatively, the recess 220g may have a different size as the display 210g and only the size/shape of the display may be designed to compensate in an improved way for the tilting angle of the tiltable structure 200g. For example, a front-side of the display 210g may be shaped in a way, that different sub-regions of the front-side can be activated (used as active region) for different tilting angles of the tiltable structure 200g.

The display 200g may be a curved display 210g, to enable filling in a positive manner. This way, no protruding edges of the display 210g may be visible. Further, the display 210g can be integrated in the tiltable structure, such that the whole dimension of the display 210g may be not perceptible by a user. For example, the user may only recognize the active area 212g, 212h of the display 210g, which may improve the user's experience, since distraction by non-active areas of the display 210g can be omitted.

A shape of the curved display 210g, e.g., the front side of the curved display 210g, may be designed to compensate for a tilt of the tiltable structure 200g. For example, different regions of the curved display 210g may comprise different surface normal, such that by activating different active areas 212g, 212h a radiation characteristic of the curved display 210g can be adjusted. The front side of the display 210g

For example, the active area 212g, 212h, which may display the infotainment content of the curved display 210g, may virtually move to a different region of the curved display 210g depending on the tilting angle of the tiltable structure 200g. As can be seen in Fig. 2g, the active area 212g may be located in a lower half of the curved display 210g for an initial position of the tiltable structure 200g. This may be suited for a user with a seat height of an adult, e.g., a man. If the user may have a lower seat height, e.g., for a child, the active area 212g may be moved to the bottom of the curved display 210g, which would lead to a radiation suited for a lower seat height. The adjustment to the seat height can be performed by use of a sensor as described above.

As can be seen in Fig. 2h, when the seat is tilted the processing unit may determine the display parameter, the active area 212h of the curved display 210g. The active area 212h is moved to an upper part of the curved display 210g and thus the radiation characteristic of the display can be kept constant and the tilting angle of the tiltable structure 200g can be compensated by using a different active area 212h.

Fig. 2i and Fig. 2j show another example for adjusting the display parameter in dependence of the tilting angle of the tiltable structure 200i. The display parameter may correspond to a position of the display 210i, e.g., a bendable display 210i.

The bendable display 210i may be arranged behind a cover glass, e.g., a cover touch glass 250. For example, the bendable display can be moved in the housing region 220i (not graphically highlighted) directly behind the cover glass. The housing region 220i may have the same dimension as the cover glass and the bendable display 210i may adapt a shape of a sub-region in the housing region 220i, where the bendable display 210i is arranged. This, way a radiation characteristic of the bendable display 210i can be adjusted, by adapting the shape, e.g., the front side of the bendable display 210i, to a (sub-)region of the housing region 220i. Thus, the bendable display 210i can be adapted in an eased way to the housing region 220i (and the cover glass 250), which may improve the user's viewing angle.

For example, as can be seen in Fig. 2h, the bendable display 210i may be arranged at the middle of the cover glass 250 for an initial position of the tiltable structure 200i. When the tiltable structure 200i is tilted (see Fig. 2j) the bendable display 210i may be moved to an upper part of the cover glass 250 to compensate for the tilting angle of the tiltable structure 200i. The bendable display 210i may adapt a shape to a shape of a sub-region in the housing region 220i, e.g., to a shape of the cover glass 250. Because of the different position of the bendable display and/or the different shape of the front side of the bendable display, the radiation characteristic of the display may be changed and thus the user's viewing angle can be improved for a tilted tiltable structure 200i.

Optionally, the bendable display 210i can be combined with the sensor 270 to compensate for different seat height of different users.

More details and aspects are mentioned in connection with the embodiments described above and/or below. The example shown in Fig. 2 may comprise one or more optional additional features corresponding to one or more aspects mentioned in connection with the proposed concept or one or more examples described above (e.g., Fig. 1) and/or below (e.g., Fig. 3).

Fig. 3 shows an example of a method 300. The method 300 for improving a user's viewing angle on a display integrated in a tiltable structure comprises determining 310 a tilting angle of the tiltable structure. Further, the method 300 comprises adjusting 320 a display parameter based on the determined tilting angle to improve the user's viewing angle on the display. For example, obtaining 310 and adjusting 320 may be performed by a processing unit as described with reference to Fig. 1.

More details and aspects are mentioned in connection with the embodiments described above. The example shown in Fig. 3 may comprise one or more optional additional features corresponding to one or more aspects mentioned in connection with the proposed concept or one or more examples described above (e.g., Fig. 1 - 2).

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, - processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

If some aspects have been described in relation to a device or system, these aspects should also be understood as a description of the corresponding method and vice versa. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

### References

30 control unit
32 one or more interfaces
34 processing circuitry
200a, 200g, 200i tiltable structure
210a, 210g, 210i display
212g, 212h active area
220a, 220g, 220i housing region
240 lens
250 cover touch glass
270 sensor
300 method for improving a user's viewing angle
310 determining a tilting angle
320 adjusting a display parameter

## Claims

1. A processing unit (30) for improving a user's viewing angle (ω) on a display (210a; 210g; 210i) integrated in a tiltable structure (200a; 200g; 200i), comprising:
one or more interfaces (32) configured to communicate with the display (210a; 210g; 210i); and
processing circuitry (34) configured to control the one or more interfaces (32) and to:
determine a tilting angle of the tiltable structure (200a; 200g; 200i); and
adjust a display parameter based on the determined tilting angle to improve the user's viewing angle (ω) on the display (210a; 210g; 210i).

2. The processing unit (30) according to claim 1, wherein
the display parameter comprises information about an orientation of the display (210a; 210g; 210i) such that adjusting the display parameter leads to an adjustment of the orientation of the display (210a; 210g; 210i).

3. The processing unit (30) according to any of the claims 1 or 2, wherein
the display parameter comprises information about a position of the display (210a; 210g; 210i) in the tiltable structure (200a; 200g; 200i) such that adjusting the display parameter leads to an adjustment of the position and/or a dimension of the display (210a; 210g; 210i) in the tiltable structure (200a; 200g; 200i).

4. The processing unit (30) according to any of the preceding claims, wherein
the display parameter comprises information about an active display area (212g; 212i) of the display (210a; 210g; 210i) such that adjusting the display parameter leads to an adjustment of the active display area (212g; 212i).

5. In-vehicle infotainment system (290), comprising
a processing unit (30) according to any of the preceding claims;
a display (210a; 210g; 210i) integrated in a tiltable structure (200a; 200g; 200i); and
a position sensor to determine a tilting angle of the tiltable structure (200a; 200g; 200i).

6. The in-vehicle infotainment system (290) according to claim 5, further comprising a sensor (270) configured to determine information about a user's position and/or a user's viewing angle (ω) and wherein the processing unit (30) is further configured to:
determine information about a desired user's display orientation based on the determined information of the sensor (270); and
adjust the display parameter based on the determined information about the desired user's display orientation.

7. The in-vehicle infotainment system (270) according to any of the claims 5 or 6, further comprising
at least one lens (240) for compensating a tilt of the tiltable structure (200a; 200g; 200i) and wherein the at least one lens (240) can be moved in front of the display (210a; 210g; 210i) if a determined tilting angle exceeds a threshold.

8. The in-vehicle infotainment system (270) according to any of the claims 5 - 7, wherein
the tiltable structure (200a; 200g; 200i) comprises a housing region (220a; 220g; 220i) for the display (210a; 210g; 210i), wherein a dimension of the housing region (220a; 220g; 220i) is shaped to allow an adjustment of the display parameter to compensate for a tilting angle of the tiltable structure (200a; 200g; 200i).

9. A method (300) for improving a user's viewing angle (ω) on a display (210a; 210g; 210i) integrated in a tiltable structure (200a; 200g; 200i), comprising
determining (310) a tilting angle of the tiltable structure (200a; 200g; 200i); and
adjusting (320) a display parameter based on the determined tilting angle to improve the user's viewing angle (ω) on the display (210a; 210g; 210i).

10. A computer program having a program code for performing the method (300) according to claim 9, when the computer program is executed on a computer, a processor, or a programmable hardware component.
